# EUROPEAN PATENT APPLICATION

(11) **EP 4 420 973 A1**
(43) Date of publication of application: **28.08.2024**
(21) Application number: 23315039.0
(22) Date of filing: 23.02.2023
(51) Int. Cl.: B63H 9/061, B63B 41/00, B63B 1/28, B63B 1/24, B63H 16/04, B64C 3/48, B64C 3/44

(54) **IMPROVED FOIL FOR A FIN OR SAIL OR KEEL OR WINDMILL BLADE**

(71) Applicant: Forspective, 36000 Châteauroux (FR)
(72) Inventor: Duperray, Philippe, 36000 Châteauroux (FR)
(74) Representative: BiiP cvba

(57) **Abstract**

The present invention is directed to a foil section consisting of a hollow profile having a foil shaped axial cross section, characterized in that the hollow profile is made of self-supporting elastic plastic. In a preferred embodiment of the present invention, the foil section consists of a one-piece elastomeric plastic. In a second aspect, the present invention is directed to a sail or sail section or sail assembly comprising one or more of the foil sections. In a third aspect, the present invention is directed to a keel or keel section or keel assembly comprising one or more of the foil section. In a fourth and fifth aspect and sixth aspect, the present invention is directed to diving fins comprising the foil section as described, and to paddles or rowing oars comprising the foil section as described and to windmill blades comprising the foil section as described.

## Description

### TECHNICAL FIELD

The present invention generally relates to a foil section for use as aerofoil or hydrofoil. In addition, the present invention further relates to a sail or fin or keel or windmill blade comprising such foil section.

### BACKGROUND

Traditionally, sails are made from a combination of woven materials-including canvas or polyester cloth, laminated membranes or bonded filaments-usually in a three- or four-sided shape.

A sail provides propulsive force to propel sailing ships, sailboats, surfboards, ice boats, etc. via a combination of lift and drag, depending on its angle of attack, which is the angle with respect to the apparent wind. On points of sail where it is possible to align the leading edge of the sail with the apparent wind, the sail may act more or less as an airfoil, generating propulsive force as air passes along its surface (cfr. an airplane wing).

For instance, an airfoil should ideally have adaptive camber, i.e. camber is the asymmetry between the two acting surfaces of an airfoil, namely the convex side and the concave side, depending on tack and wind speed, as the airfoil becomes more efficient with greater curvature on the downwind side. Secondly, since in case of upwind sailing the windward side changes with each tack, obviously the curvature of the airfoil should reverse as well, i.e. the convex side should become concave side, and vice versa.

A traditional sail's camber line indeed changes when sailing upwind because the sail curvature indeed reverses upon changing the windward side. However, as a conventional sail simply fills in with wind on each tack, it does not perform well compared to a well-designed airfoil and may result in disturbances at certain points of sail.

The above mentioned problems arise with sailboat keels similarly. In sailboats, keels serve two purposes: 1) minimizing the lateral motion of the vessel under sail (leeway) and 2) as a counterweight to the lateral force of the wind on the sail(s) that causes rolling to the side (heeling). The keel uses the forward motion of the boat to generate lift to counteract the leeward force of the wind.

However, similar to a sail, the keel acting as an hydrofoil ideally should have adaptive camber and reversible curvature depending on the point of sail and the speed.

In an attempt to provide an improved sail, FR2773773A1 (BALLU) provides sail having a series of semi-rigid ribs (10), placed along an axis perpendicular to the mast, for maintaining a pre-specified gap between two sail casings. The sail asymmetry is reversible.

Further, EP3464054B1 (SOFTWING) describes a sail including two sail surfaces spaced apart from one another, and an adjustable skeleton device disposed between the surfaces. The skeleton device provides for reversibility of the sail.

Another example is US9944356B1 (WIGLEY) describing a hydrofoil, in particular a keel for a sailboat, with reversible asymmetry comprising a skin that forms a foil contour is at least partially attached to and wrapped around a leading edge structure so two edges of the skin form the trailing edge of the fluid foil. The document states that the same structure is to be used as a sail as well.

A general drawback of the above references is that a sail or keel shaped by an internal elastic reversible profile or frame is a complex structure which obviously requires complex and costly production and assembly.

Another drawback is that the frame and other support structures in the above sails or keel may be exposed to significantly high tension forces when aiming to achieve and maintain an acceptable foil-like shape.

Therefore, considering the above, it is a general objective of the present invention to provide a foil-like shaped sail or keel structure requiring less complex and costly production and assembly while at the same time meeting the requirements of having adaptive camber and reversible curvature.

Further, it is an objective of the present invention to provide a foil-like shaped sail or keel structure allowing maintaining such shape with less risk of breakage under high tension forces.

In addition, it is an objective of the present invention to provide a foil-like shaped sail or keel structure allowing naturally adapting its shape depending on the point of sail and speed, thereby naturally adapting its camber line, and where applicable reversing its curvature upon tacking.

### SUMMARY

In a first aspect, the present invention is directed to a foil section consisting of a hollow profile having a foil shaped axial cross section, characterized in that the hollow profile is made of self-supporting elastic plastic.

In a preferred embodiment of the present invention, the foil section consists of a one-piece elastomeric or thermoplastic plastic.

In a second aspect, the present invention is directed to a sail or sail section or sail assembly comprising one or more of the foil sections.

in a third aspect, the present invention is directed to a keel or keel section or keel assembly comprising one or more of the foil sections.

In a fourth and fifth and sixt aspect, the present invention is directed to diving fins comprising the foil section as described, to paddles or rowing oars comprising the foil section as described, and to windmill blades comprising the foil section as described.

### BRIEF DESCRIPTION OF THE DRAWINGS

FIG 1 schematically illustrates the working principle of a foil section in accordance with the present invention.
FIG 2 and 3 illustrates an embodiment of the foil section of the present invention.
FIG 4A and 4B illustrate a sail assembly comprising a number of foil sections of the present invention.
FIG 5A and 5B illustrate a keel assembly comprising a number of foil sections of the present invention.
FIG 6 illustrates a fin for a surfer board comprising a number of foil sections of the present invention.
FIG 7 and FIG 8 illustrate respectively diving fins comprising the foil section as described, and paddles or rowing oars comprising the foil section as described.

### DETAILED DESCRIPTION

The present invention is directed to a foil section consisting of a hollow profile having a foil shaped axial cross section, characterized in that the hollow profile is made of self-supporting elastic plastic.

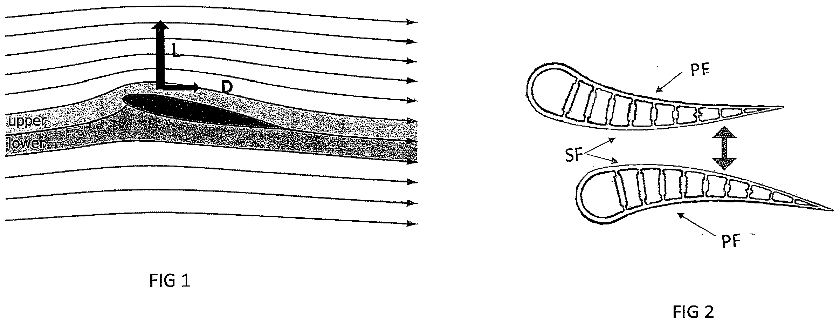

In the context of the present invention and as commonly known, a foil section is understood as a solid object with any such shape that when placed in a moving fluid at a suitable angle of attack the lift (force L generated perpendicular to the fluid flow) is substantially larger than the drag (force D generated parallel to the fluid flow) (see FIG 1). If the fluid is a gas, the foil is called an airfoil or aerofoil, and if the fluid is water the foil is called a hydrofoil. A foil generates lift primarily because of its shape and angle of attack. When oriented at a suitable angle, the foil deflects the oncoming fluid, resulting in a force on the foil in the direction opposite to the deflection.

In the context of the present invention, a hollow profile having a foil shaped axial cross section is understood as the profile having an axial perimeter corresponding to an axial perimeter of a foil. More particularly, the hollow profile may have an outer shell that in axial cross section has the shape corresponding to an axial cross section of an outer shell of a foil, e.g. an axial perimeter of a plane wing or an axial perimeter of a dolphin flipper fin.

In the context of the present invention, self-supporting is understood as the hollow profile being sufficiently rigid not to collapse if not supported.

In an embodiment of the present invention and as illustrated in FIG 2, the foil section may have a pressure face (PF) (i.e. intrados or concave) and a suction face (SF) (i.e. extrados or convex) and is adapted to reversibly bend thereby alternating the pressure face and the suction face within the fluid, i.e air or water. Therefor the hollow profile made of self-supporting elastic plastic has to be sufficiently rigid to be self-supporting and at the same time sufficiently elastic to allow adaptive camber and reversible curvature. In other words, the foil section may be adapted to reversibly bend in an autonomous non-motorized way to an aero- or hydro-dynamically efficient shape.

In an embodiment of the present invention, the leading edge (a) of the foil may be have any shape as suitable for use as a sail or keel, and in particular a circular shape.

In an embodiment of the present invention, the trailing edge (b) may have substantially sharp end constituted by two converging side walls (c).

in an embodiment of the present invention, the hollow profile may be internally supported by a number of supporting inner ribs (d). These ribs connect the two converging side walls (c) and maintaining the mutual distance between these walls in any state of curvature of the foil.

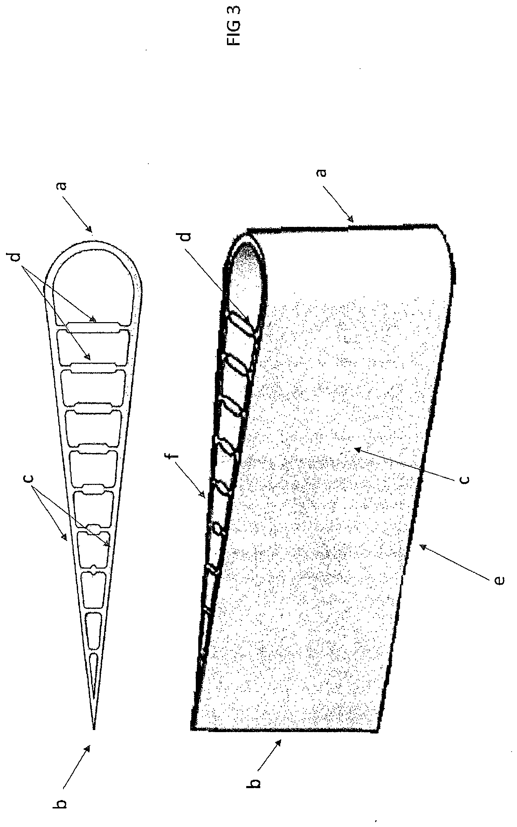

In an embodiment of the present invention as shown in FIG 3, the foil section may have a elastic hollow profile constituted by the side walls, the leading edge (a) and the trailing edge (b), wherein the convergent side walls (c) are connected by the inner ribs (d) aligned underneath the profile's outer shell.

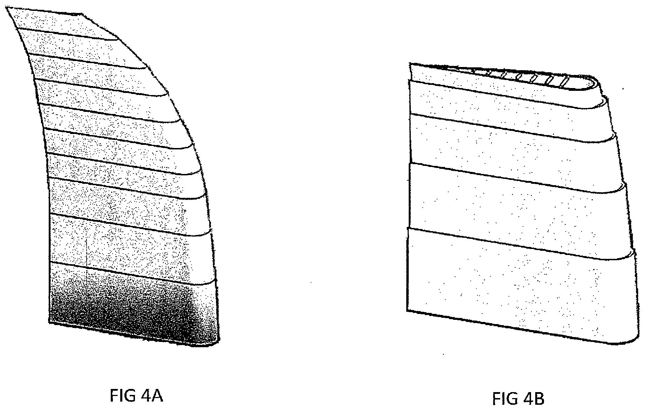

In an axial cross section of an embodiment of the foil of the present invention, the inner ribs may support the hollow profile in a direction with an angle between 30° and 150° relative to a straight line connecting the leading edge (a) with a trailing edge (b) in non-curved state. Preferably such angle is between 60° and 120°, or between 75° and 105°, or as illustrated in FIG 4 about 90° in non-curved state.

In an embodiment of the present invention, the inner ribs (d) extend in a lateral plane from a top (f) of the foil section to the bottom (e) of the foil section. In such case, the inner ribs constitute in fact a number of beams of which the longitudinal side walls connect the two converging side walls (c) and maintaining the mutual distance between these walls in any state of curvature of the foil section.

Alternatively, the inner ribs may be interrupted once or more in a lateral plane from a top (f) of the foil section to the bottom (e) of the foil section. They may even be interrupted in the lateral plane so many times as to constitute in fact a number of axially elongated bars connecting the two converging side walls (c) and maintaining the mutual distance between these walls in any state of curvature of the foil section.

Further, as also can be seen in FIG 2, the inner ribs are adapted to follow the reversible curvature of the foil section. Therefore, the connection of the ribs to the side walls may be made of a elastic material adapted to reversibly deform and/or bend allowing the ribs to reversibly changing its position relative to each side wall. Preferably, the inner ribs are made as a whole of such elastic material.

In embodiment, the side walls may have a cross-sectional thickness of between 0,1 and 10 mm, or between 0,1 and 5mm, or between 0,1 and 2mm depending on the material used and the required elasticity and reversibility. The cross-sectional thickness of the ribs may be as well between 0,1 and 10 mm, or between 0,1 and 5mm, or between 0,1 and 2mm depending on the material used and the required elasticity and reversibility.

In an embodiment, the number of ribs per 10 centimetres in longitudinal direction of the hollow profile may be between 2 and 20, or between 2 and 15, or between 2 and 10.

The elastic hollow profile constituted by the side walls, the leading edge and the trailing edge may be made of any material providing sufficient elastic deformation, while not suffering from plastic deformation. Such material should have sufficiently low modulus of elasticity (also called Young's modulus) , or in other words sufficiently high modulus of resilience, i.e. the modulus of resilience is the maximum amount of volume that a material will elastically deform before becoming permanently deformed. As known in the state of the art, elasticity is the ability of a material to absorb energy when it is deformed elastically, and release that energy upon unloading. Elasticity is the ability of a material to withstand elastic deformation without deforming plastically. In other words, elasticity involves the stretching of atomic bonds prior to the breaking of the bonds.. Further, such material should have sufficient tensile strength, sufficient impact resistance, sufficient abrasion resistance, and should be sufficiently waterproof.

In an embodiment of the present invention, the hollow profile of the foil section may be made of a self-supporting elastic plastic.

In a particular embodiment, the hollow profile may be made of an elastomer or an elastomer-like thermoplastic material such as silicone rubber (SBR), polyurethane rubber (PUR rubber), latex, styrene-butadiene rubber (SBR), ethylene propylene diene methylene (EPDM), chlorosulfonated polyethylene (CSM), acrylated aliphatic urethane (eg. Resione F80 type) etc.

In another particular embodiment, the hollow profile may be made of soft thermoplastics such as Polypropylene (PP), soft Polyvinyl Chloride (PVC), polyamides (such as PA12 or PA11), Teflon (PTFE).

in an embodiment, suitable self-supporting elastic plastic may have a Young's modulus between 1 and 2000MPa, or between 1 and 1500MPa, or between 1 and 1000MPa as measured in accordance with ISO527.

In an embodiment, suitable self-supporting elastic plastic may have a tensile strength between 1 and 50MPa as measured in accordance with ISO527.

In a particular embodiment, the self-supporting elastic plastic may be an elastomer or an elastomer-like thermoplastic having a Young's modulus below 15MPa, or below 10MPa as measured in accordance with ISO527. Further suitable elastomers or elastomer-like thermoplastics may have a tensile strength between 1 MPa and 30MPa, or between 1 MPa and 20MPa, or between 1 MPa and 15MPa as measured in accordance with ISO527.

In another particular embodiment, the self-supporting elastic plastic may be a soft thermoplastic having a Young's modulus between 1 and 2000MPa, or between 1 and 1500MPa, or below 1000MPa, or below 500MPa as measured in accordance with ISO527. Further soft thermoplastics may have a tensile strength between 10MPa and 50MPa, or between 20MPa and 50MPa, or between 30MPa and 50MPa as measured in accordance with ISO527.

Below table illustrates some examples, of suitable materials:

| | **SBR** | **SR** | **Resione F80** | **CSM** | **EPDM** | **PUR (rubber)** | |
|---|---|---|---|---|---|---|---|
| **Young's modulus** | 6 | 3 | 1,8 | 9 | 6 | 6 | MPa |
| **Tensile strength** | 17,5 | 10 | 3,8 | 19 | 17,5 | 25 | MPa |
| | | | | | | | |

| | **PA12** | **soft PVC** | **PP** | **PA11** | **PTFE** | | |
|---|---|---|---|---|---|---|---|
| **Young's modulus** | 1935 | 35 | 1325 | 1250 | 575 | | MPa |
| **Tensile strength** | 45 | 22 | 34 | 47 | 30,5 | | MPa |

In addition, the elastomeric or thermoplastic material may be fibre reinforced, eg. carbon or glass fibers. In the latter case, the orientation of the fibers would be such that they do not overly inhibit the strain required to bend the foil section but such that the fibers can contribute to its rigidity in other directions.

In a preferred embodiment in accordance with the present invention, the inner ribs and the hollow profile are made of the same self-supporting elastic plastic. The advantage thereof is lower production cost.

In a preferred embodiment in accordance with the present invention, the foil section consists of a one-piece elastomeric or thermoplastic material. The advantage thereof is even lower production cost since the foil section can be manufactured as a whole by a suitable plastic converting process, such as for example extrusion or injection molding, or 3D printing. In addition, manufacturing one-piece foil sections obviously results in very low or zero assembly cost.

In a second aspect of the present invention, a sail or sail section is provided comprising a foil section or a number of foil sections as described above.

Person skilled in the art will understand that a sail may be constituted by one sail section comprising one foil section as described above, or may be constituted by a number of connected sail sections and suitable gear for connecting and positioning the sail sections.

In a particular embodiment of the present invention and as illustrated In FIG 4A and B, a sail assembly (FIG 4A) may comprise at least two of said sail sections, wherein the size of the higher section in risen state is smaller than the size of the lower section such that in collapsed state the higher section fits into the lower section (FIG 4B). In such case the inner ribs of each sail section (or foil section) are positioned such as to allow the higher section to fit in the lower section. A particular advantage of such collapsible sail assembly is that it allows easy raising of the sails, as well as easy (partial) collapsing if a boat has to pass for example under bridges, electricity grids etc.

In a third aspect of the present invention, a fin or keel or keel section (eg. for a sailboat or surfer board) is provided comprising a foil section or a number of foil sections as described above.

Person skilled in the art will understand that a fin or keel may be constituted by one fin section or keel section comprising one foil section as described above, or may be constituted by a number of connected fin or keel sections and suitable gear for connecting and positioning the keel sections.

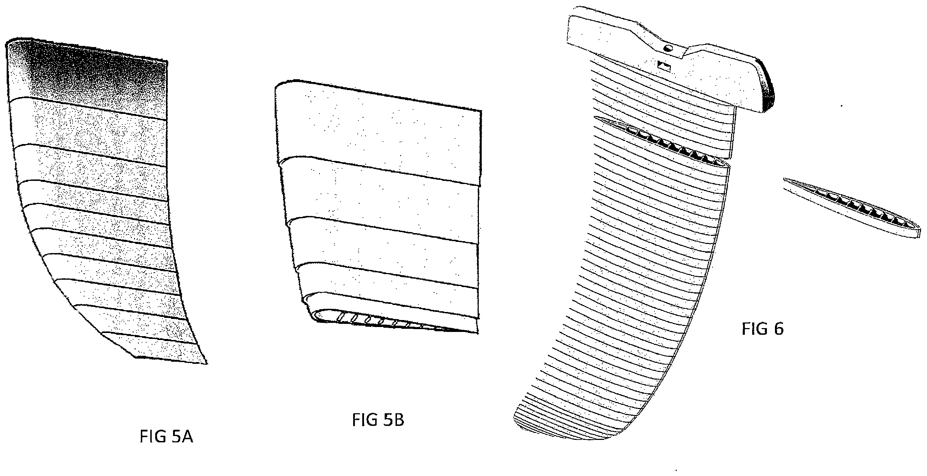

In a particular embodiment of the present invention and as illustrated in FIG 5A and B, a keel assembly (FIG 5A) may comprise at least two of said keel sections, wherein the size of the lower section in immersed state is smaller than the size of the higher section such that in collapsed state the lower section fits into the higher section (FIG 5B). In such case the inner ribs of each keel section (or foil section) are positioned such as to allow the lower section to fit in the higher section. A particular advantage of such collapsible keel assembly is that it allows easy (partial) collapsing if a sailboat has to pass shallow water of has to be pulled on land for maintenance, as well as easy extending the keel when entering the water again.

in FIG 6, a fin for a surfboard is illustrated comprising between 10 and 100 foil sections according to the present invention.

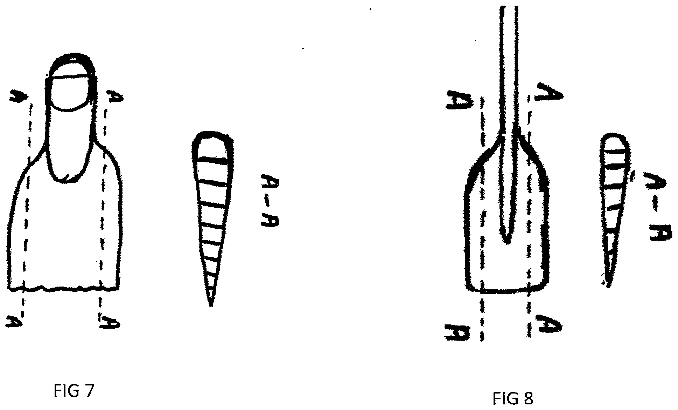

In addition, in a fourth and fifth aspect and as illustrated respectively in FIG 6 and FIG 7, the present invention is directed to diving fins comprising the foil section as described, and to paddles or rowing oars comprising the foil section as described.

It should be further appreciated by that a foil section according to present invention may be used in all application wherein reversible foils may provide benefits, such as windmill blades

## Claims

1. A foil section consisting of a hollow profile having a foil shaped axial cross section, **characterized in that** the hollow profile is made of self-supporting elastic plastic, and is adapted to reversibly bend thereby alternating its pressure face and suction face.

2. A foil section according to claim 1, consisting of a one-piece elastomeric or thermoplastic material.

3. A foil section according to claim 1, wherein the hollow profile is internally supported by a number of supporting inner ribs.

4. A foil section according to claim 1, having a leading edge and trailing edge, and wherein in an axial cross section the inner ribs support the hollow profile in a direction with an angle of at least 45° relative to a straight line connecting the leading edge with a trailing edge in non-curved state.

5. A foil section according to claim 1, wherein the inner ribs extend in a lateral plane from a top A of the foil section to the bottom B of the foil section.

6. A foil section according to claim 1, wherein the inner ribs reversibly bend corresponding to the reversible curvature of the foil section.

7. A foil section according to claim 1, wherein the inner ribs and the hollow profile are made of the same self-supporting elastic plastic.

8. A foil section according to claim 1, wherein the self-supporting elastic plastic has a Young's modulus between 1 and 2000MPa.

9. A sail or sail section comprising a foil section according to any of the foregoing claims.

10. A fin or keel or keel section comprising a foil section according to any of claims 1 to 8.

11. A diving fin comprising a foil section according to any of claims 1 to 8.

12. A paddle or rowing oar comprising a foil section according to any of claims 1 to 8.

13. A windmill blade comprising a foil section according to any of claims 1 to 8.
